# EUROPEAN PATENT SPECIFICATION

(11) **EP 1 228 012 B1**
(45) Date of publication and mention of the grant of the patent: **07.02.2007**
(21) Application number: 00981196.9
(22) Date of filing: 28.09.2000
(51) Int. Cl.: C03B 37/05, D04H 1/72, D04H 1/00, D04H 1/70, D04H 13/00

(54) **PROCESSES AND APPARATUS FOR THE PRODUCTION OF MAN-MADE VITREOUS FIBRE PRODUCTS**
VERFAHREN UND VORRICHTUNGEN ZUR HERSTELLUNG VON GLASFASERPRODUKTEN
PROCEDE ET APPAREIL DE PRODUCTION DE PRODUITS A BASE DE FIBRES VITREUSES

(30) Priority: 28.09.1999 EP 99119020
(43) Date of publication of application: 07.08.2002
(73) Proprietor: Rockwool International A/S, 2640 Hedehusene (DK)
(72) Inventor: FAARBORG, Christian, // (DK)
(74) Representative: Lawrence, Peter Robin Broughton
(86) International application number: PCT/EP2000/009914
(87) International publication number: WO 2001/023313

(56) References cited:
- WO-A-96/36573
- WO-A-97/32068
- FR-A- 2 736 940
- GB-A- 1 175 315
- US-A- 2 830 648
- US-A- 4 433 992
- US-A- 5 093 069
- US-A- 5 111 552
- US-A- 5 906 669

## Description

This invention relates to apparatus and processes for making man-made vitreous fibre (MMVF) products by a centrifugal spinner technique in which the or each rotor is mounted to rotate about a substantially horizontal axis. It also relates to products having particularly useful combinations of properties and which can be made by the centrifugal spinner technique.

The centrifugal spinner can have a single rotor mounted for rotation on a substantially horizontal axis. More usually the centrifugal spinner is a cascade spinner comprising a first rotor and one or more subsequent rotors each mounted for rotation about a substantially horizontal axis and arranged such that melt poured on to the first rotor is thrown on to the or each subsequent rotor in turn and is thrown centrifugally off the or each subsequent rotor and optionally off the first rotor as fibres. Appropriate motor means are provided to drive the rotor or rotors.

Conventionally, air is supplied around and/or from the spinner whereby the fibres are blown forward from the spinner as a cloud of fibres entrained in air.

The fibres are conventionally collected as a web on a collector through which suction is applied. The collector generally has a continuously moving band or other surface whereby the web is continuously carried away from the point at which the fibres collect on the collector.

Often the web is cross lapped or otherwise laminated on itself so as to build up the thickness of the fibre product and so as to minimise any variations in thickness or quality that may occur at individual points within the additional web.

It is important to deposit the fibres on the collector in as laminar a fashion as possible. If fibres are deposited randomly, or perpendicular to the plane of the web, for instance as clusters or balls of fibres, this. tends to detract from the properties of the web and products made from it. For instance the web, or products made from it, may have inferior tensile strength and may have a visually non-uniform appearance. This problem tends to increase as web thickness increases.

In some processes of making MMVF products, the fibres travel downwardly before they are collected, but this is usually inconvenient when the fibres are made using a centrifugal spinner of the type described above.

In other processes of making MMVF products, the fibres are formed by other techniques and/or travel a long distance (often with travel through a confining duct) before they are collected on a collector. Examples of such processes are in US 2,110,280, 2,830,648, 4,163,036, 4,167,404 and US 5,455,991. Although this indirect transfer of the fibres from the fibre-forming apparatus to the collector may be appropriate in some fibre-forming processes, it is inconvenient and undesirable when the fibres are formed by a centrifugal spinner of the type described above. The indirect travel of the fibres to the collector is liable to cause balling and other undesirable effects in the fibre configurations, thereby reducing the laminar characteristics of the lay-down in the web. Other materials involved in the process such as deposits of fibres and/or binder and/or shot which collect on the duct walls may also form balls with fibres, causing additional non-laminar lay down in the web.

The conventional way of collecting the fibres off a centrifugal spinner of the type described above is therefore to provide a continuously travelling collector relatively close to the spinner.

The collector is positioned in front of the spinner. It may be open to the atmosphere, but generally it is at least partially enclosed within a collecting chamber which extends forward from the spinner. The chamber may be defined by walls, for instance top and side walls and the collector may carry the web out of the chamber.

The collector receives the cloud of fibres direct from the spinner and collects the fibres as a web, and carries the web away from the position where the fibres are initially collected as the web. By saying that the cloud of fibres is received directly from the spinner we mean that the fibres travel as a cloud only a short distance from the spinner to the collector, the distance separating the spinner from the closest point to the collector usually being not more than 5 metres, most usually not more than 3 metres. Within this short distance there is usually a sump in the base of the chamber for shot and other melt debris. Throughout this distance the cloud is. substantially unconfined as a result of the cross section of the chamber through which it travels to the collector being substantially greater than the cross section of the centrifugal spinner. Usually the cross sectional area of the chamber adjacent to the centrifugal spinner is at least two times, and often at least four times, the cross sectional area of the centrifugal spinner (to allow for the fibres to travel outwards from the spinner and forwards as a cloud). Confinement interferes with the air flows to the collector and the invention excludes transporting the fibres through an elongated and confining duct.

Although it is known to collect mineral fibres made by a various fiberising processes on to various types of collectors, including cylindrical collectors, the conventional collectors used with centrifugal spinners of the type described above travel away from the spinners and are flat collectors and, in particular, are upwardly inclined collectors, for instance as shown in GB-A-961,900 and WO88/10242. When using such collectors, the position on the collector where fibre collection initiates is close to the spinner. The web at and soon after this position is thin but increases rapidly in thickness as the web is carried on the collector towards the position on the collector where fibre collection finishes, after which the web is taken off the collector. The finishing position is, in conventional systems, the point furthest from the spinner at which fibres are deposited on to the collector, and in practice it is usually the position where the collector travels out of the chamber. The web is then taken off the collector outside the chamber.

The consequence of this conventional arrangement is that the web is thinnest close to the spinner and thickest distant from the spinner. This means that the amount of air sucked through the web and the collector will tend to decrease as the web travels from the initiating position away from the spinner to the finishing position. However there is inevitably still a large amount of air travelling along and above the collector even at positions close to the finishing position, but the thickness of the web inhibits the ability of this air to be sucked through the web and the collector.

This air has to escape somewhere. If the collector is open (i.e., allows the escape of air) adjacent to the finishing position then the air can escape through the opening, but this necessitates the provision of collecting and treating or recycling equipment so as to minimise environmental pollution. If the chamber is closed adjacent to the finishing position, so as to minimise or prevent the escape of air from the parts of the chamber adjacent to the finishing position, then the air will tend to reverse direction turbulently and travel back down the collector towards the spinner, creating turbulence over most or all of the collector.

Turbulence in the cloud of fibres as it travels from the spinner on to the collector is undesirable since it promotes the deposition of the fibres as clusters or balls, rather than in a laminar arrangement. An apparatus and process which minimises this turbulence is described in US-A-5 906 669.

The web is usually quite thin (e.g., 300-800g/m², often around 500 g/m²) and is then cross lapped or otherwise laminated to provide the desired thickness. The collector can then be quite short and fast. When a thick web is to be made the collector needs to be slower and longer, but this increases the difficulty of controlling flow patterns.

It would be desirable to be able to modify the collector chamber so as to improve the control of the air flows in the chamber. Thus it would be desirable to be able to achieve improved fibre lay down and improved web properties by modifying the arrangement of the collection chamber. Further, it would be desirable to be able to achieve sufficient improvement in air flows and fibre lay down that thicker webs could be collected, even to the extent that it is then not necessary to cross lap the web to build up a batt of the desired thickness for many insulation purposes.

Attempts at controlling the performance of fibre lay down and gas flow in the chamber by varying gas flows have been published previously in, for instance, DK-B-111457 and DK-B-155223. However they are difficult to operate effectively and do not satisfactorily solve the problems.

According to the invention, we provide apparatus for making a web of MMVF which comprises
a centrifugal spinner having a front end, a first rotatable rotor or a set of rotatable rotors consisting of a first rotor and one or more subsequent rotors, wherein the or each rotor is mounted for rotation about a substantially horizontal axis in front of the front end whereby melt poured onto the first rotor is thrown off as fibres or, in a set of rotors, is thrown onto the or each subsequent rotor in sequence and is thrown off the or each subsequent rotor and optionally off the first rotor as fibres,
motor means for rotating the or each rotor,
air supply means for supplying air around and/or from the spinner whereby the fibres are blown forward from the spinner as a cloud of fibres entrained in air,
a collecting chamber which extends forward from the spinner,
a collector mounted in the collecting chamber to receive the cloud of fibres direct from the spinner,
suction means for applying suction through the collector and thereby collecting fibres from the cloud on the collector as a web, and
means for causing the collector to travel within the chamber from an initiating position where the fibre collection initiates on the collector to a finishing position where the fibre collection finishes,
characterised in that the collector is mounted to travel towards the spinner as the collector travels from the initiating position towards the finishing position.

The invention also includes a process of making a web of MMVF using such an apparatus wherein the fibres are collected on the collector as the collector moves from the initiating position towards the spinner and the finishing position.

In the invention the collector therefore travels in a direction opposite to the normal direction of travel for collectors from cascade centrifugal spinners. The web is therefore thinnest at the point in the chamber furthest from the spinner, and it is thicker or thickest at the point in the travel of the collector closest to the spinner. This allows for easier control of the air flows through the collecting chamber and, in particular, over and through the collector. It promotes laminar lay down and uniform lay down of fibres with consequential improvement in the physical properties of the web and of products made from the web.

Final tensile strength, visual uniformity and overall product quality normally deteriorates unacceptably if the web becomes too thick, but the improved lay-down achieved in the invention means that the thickness of the web may be allowed to become greater than is normally acceptable. Indeed it is possible to produce webs which have sufficient thickness, while maintaining good propoerties, that it is no longer necessary to cross lap or otherwise laminate them to produce batts of conventional thickness for insulation purposes. For instance the web can be collected to have a basis weight of above 1000, 2000 and up to 5000, or even 10000, g/m². Even if cross lapping or laminating is still desired or necessary, the extent of cross lapping or lamination required to make any particular batt thickness can be reduced, since the web can be thicker than is conventional, eg the web can be 500 to 2000 g/m², often 800 or 1000 to 2000, g/m².

The initiating position of the collector is the position on the collector where significant fibre deposition starts to occur to an extent such that it has become apparent that a thin web is being collected on the collector. The finishing position is the position during the travel of the collector where the web reaches essentially its final mass, with little or no subsequent fibre deposition onto the web. Generally the web is separated from the collector at or soon after the finishing position.

In the invention, the collector travels towards the spinner as the collector travels from the initiating position towards the finishing position. The initiating position, and often also the finishing position, is usually on the upper surface of the collector, ie the collector makes an angle of less than 90° to a horizontal axis extending from the spinner in the direction of travel of the cloud.

Usually the collector travels towards the spinner during the entire travel from the initiating position to the finishing position but in some instances the later part of the end of the travel, towards the finishing position, can be away from the spinner. Thus the spinner is closest to the collector at a position somewhere between the initiating and finishing positions, the closest point generally being at a position which is more than 50% and generally more than 70% of the distance of travel from the initiating position to the finishing position.

Usually the initiating position is further from the spinner than is the finishing position and usually the finishing position is closer to the spinner than any other part of the collector between the initiating and finishing positions.

Usually the initiating position is the point at which the collector enters the collecting chamber and the finishing position is either the point on the collector which is closest to the spinner or is some point on the collector to which the collector travels after passing the point which is closest to the spinner. The finishing position may be the point at which the collector exits from the chamber or may be a position before the exiting position.

The collecting chamber is generally provided with sealing means for substantially sealing the collecting chamber against the escape of air from within the chamber except through the collector. Thus there should not be uncontrolled escape of air from within the chamber to the surrounding atmosphere and preferably substantially all the air which enters the chamber exits the chamber by being sucked through the collector. Thus the collecting chamber can be of conventional construction in this respect in that the collector may be the base of the chamber and/or the end of the chamber distant from the spinner and the chamber can include baffles or other means for substantially closing the chamber around the collector especially adjacent the initiating position, so as to minimise the escape of air from the chamber above the collector adjacent and beyond the initiating position.

In the invention substantially all the fibres are generally collected on the upper surface of the collector and are drawn down onto the collector by suction through the collector. The collector is preferably a substantially flat collector which travels towards the spinner. This can be of conventional slatted or porous mesh construction and can have conventional dimensions, for instance 1 to 2 metres wide (but it can be wider, eg up to 4 metres) and 5 to 20 metres long, often around 10 metres. Often it is 2 metres wide. It is usually inclined to the horizontal so that the collector travels downwards and towards the spinner, the angle of inclination generally being not more than about 60°, often not more than about 45°, to the horizontal.

However the collector can be substantially horizontal or indeed it can be inclined slightly upwardly as it travels towards the spinner, provided that the spinner is then positioned slightly above the level of the collector so as to blow the cloud of fibres forwards and down onto the collector. Usually the inclination of the collector to the horizontal is at least 5° but it can be 0 or as low as -10 or -15°.

The top rotor of the spinner is often below the level of the initiating position. If the top rotor of the spinner is at or above the level of the initiating position, a line between the top of the top rotor and the initiating position usually makes an angle of 0 to 60°, usually 0 to 30°, to the horizontal.

This is particularly useful for reducing, in an otherwise conventional cascade spinner plant, the risk of environmental pollution and/or the need to collect and treat air from adjacent the distant end of the collector. It also reduces the turbulence of the air travelling over the collector and so improves the laminar lay down of fibres and improves the physical properties of the web.

There may be two or more spinners in side-by-side relationship supplying fibres into the chamber.

Binder and/or other additives may be included in the web in conventional manner, generally by incorporating them in the cloud of fibres before this is collected.

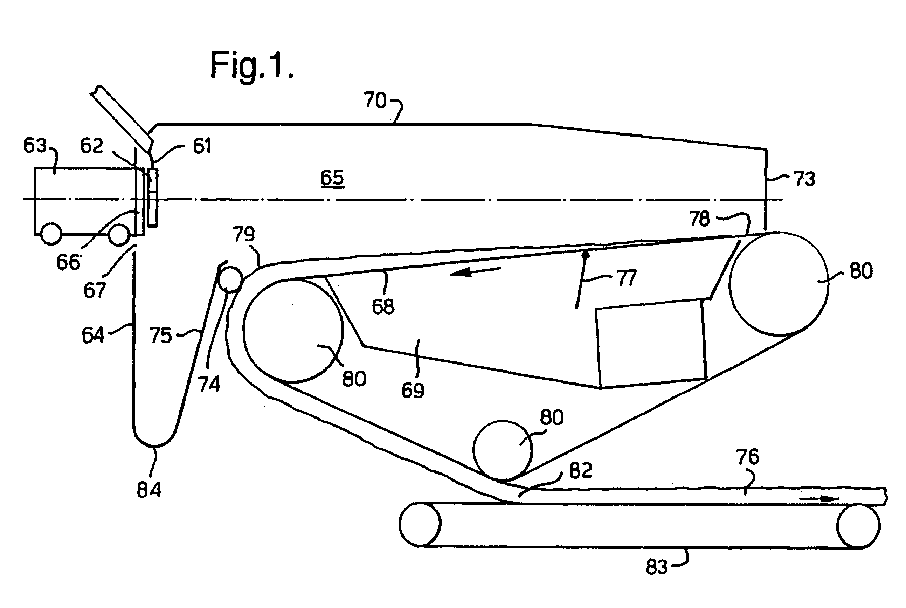

The invention is illustrated in the accompanying drawing which is a. diagrammatic side view of suitable apparatus.

The apparatus comprises a centrifugal cascade spinner 63 having a front end 66 and rotors 62 on to the first of which melt 61 is poured from a trough in conventional manner. A collection chamber 65 is positioned adjacent to and in front of the spinner 63. It has a roof 70, a far end wall 73, sides (not shown) and a near end wall 64 that is provided with an opening 67 for the spinner and for the entry of air around the spinner.

The base of the chamber is defined by a continuous collector 68 formed of transverse slats and which is caused to travel in the direction shown by the arrow around the drums 80. It travels from the web initiating position 78 to the web finishing position 79 and then down to the web take off position 82 where the web 76 is taken off the collector 68 on to a conveyor 83.

The end wall 73 terminates close to the surface of the collector 68 and so substantially closes the end of the chamber 65 against escape of significant amounts of air from the collector. The side walls also are closed against the sides of the collector. The separation of the side walls of the chamber is greater than the width of the spinner (or other spinners if there are spinners in side-by-side relationship).

A roller 74 or other gasket is positioned close to the finishing position 79 so as to seal .the chamber against the escape of air at this position and defines the level of the base of the chamber adjacent to the spinner. The height of the chamber at this point is greater than the height of the spinner. The combination of the height and width of the chamber allows the fibres to be thrown outwardly from the spinner, and they are then carried forward as a cloud. The distance from the spinner to roller 74 (the closest part of the collector) is usually less than 4 metres measured in a horizontal direction.

Screen 75 or other means are provided to prevent shot, coarse tufts and other non-uniform fibrous material being blown from the spinner downwardly on to the web as it leaves the chamber. The shot and other waste material may be collected from a sump 84 formed between the wall 64 and screen 75 in conventional manner.

In use, melt is poured on to the top of the rotors 62 from which it is thrown in sequence on to the other rotors of the cascade in conventional manner. An air manifold supplies air over the surface of the rotors and also around the rotors so as to promote fiberisation and so as to carry the fibres forward from the rotors, in conventional manner. Additional air enters through the parts of the opening 67 around the spinner, in conventional manner. All this air contributes to the entrainment of the fibres in a cloud which is carried forward into the chamber as a result of the suction which is applied through the collector 68. This suction is applied by means of a suction box 69 over which the collector 68 travels.

In some forms of apparatus it is useful to apply greater suction to the screen as it approaches the finishing position than as it departs from the initiating position. In the illustration, a baffle 77 sub-divides the suction box so that greater suction is applied to the collector on the left hand side (in the drawing) of the baffle than on the right hand side of the baffle. Alternative means for varying the suction over the length of travel of the collector can be used.

The invention allows for better distribution of fibres within the web and more uniform bulk density throughout the thickness of the web (with consequential improved tensile strength, for a given fibre weight).

For instance, in one typical process according to the invention where the collector travels towards a centrifugal cascade spinner, the bulk density at different positions in the thickness of the web may vary from 8% above average to 11% below. In the corresponding process but with the collector travelling in the opposition direction the bulk density at different positions in the thickness of the web may vary from 26% below average to 42% above average.

Instead of or in addition to providing this advantage, the invention can be utilised to allow the web 76 to acquire a greater thickness before it reaches the finishing position 79, for instance by running the collector more slowly, while maintaining satisfactory physical properties.

In the described embodiment, it will be appreciated that the collecting chamber is substantially open around the spinner, in the sense that relatively uncontrolled access of air occurs through the opening 67 around the spinner. In other embodiments of the invention, the chamber can be substantially closed around the spinner so that the chamber is then substantially closed to the uncontrolled entry or escape of air. In such embodiments, the air supply means for controllably supplying air will preferably supply the air around and/or through the spinner whereby the cloud of fibres is entrained in air substantially all of which is the air which is controllably supplied around and/or through the spinner. For instance, the spinner may be mounted in a duct which opens into the chamber and much or all of the air may enter through the duct and spinner.

The collector is preferably a substantially flat collector which is usually at a substantially gentle incline with respect to the horizontal, as described above. In other embodiments of the invention the collector can be at a much steeper angle to the horizontal (eg up to 45° or up to 80°) and/or the collector can be cylindrical (in which event a minor proportion of the fibres and the finishing position may be on the lower surface of the collector, ie at a position where the collector makes an angle of greater than 90° to the horizontal from the spinner).

Description of these other embodiments is given in WO01/23314 and the entire disclosures of which are incorporated herein by reference.

The melt which is used for pouring on to the first rotor and forming the fibres can be any convenient vitreous melt suitable for spinning by a cascade spinner or other centrifugal spinner of the type described herein. Usually it is of a melt which is known as a stone, rock or slag melt.

The web can be converted into any desired final product by conventional techniques, e.g., densification and/or oven curing. These techniques may be conducted on the web itself or on a batt formed by cross lapping the web.

The web (or batts) may be formed into any conventional MMVF products such as heat insulation, fire protection, acoustic insulation and regulation, or horticultural growth media (all of which are usually bonded products) or fibres for reinforcement or as fillers (both of which usually utilise unbonded webs or batts).

## Claims

1. Apparatus for making a web of man-made vitreous fibres comprising
a centrifugal spinner (63) having a front end (66), a first rotatable rotor or a set of rotatable rotors consisting of a first rotor (62) and one or more subsequent rotors (62), wherein the or each rotor is mounted for rotation about a substantially horizontal axis in front of the front end (66) whereby melt (61) poured onto the first rotor (62) is thrown off as fibres or, in a set of rotors, is thrown onto the or each subsequent rotor (62) in sequence and is thrown off the or each subsequent rotor (62), and optionally off the first rotor (62), as fibres,
motor means for rotating the or each rotor,
air supply means for supplying air around and/or from the spinner whereby the fibres are blown forward from the spinner (63) as a cloud of fibres entrained in air,
a collecting chamber (65) which extends forwards from the spinner,
a collector (68) mounted in the collecting chamber (65) to receive the cloud of fibres direct from the spinner (63),
suction means (69) for applying suction through the collector (68) and thereby collecting fibres from the cloud on the collector (68) as a web (76),
and means for causing the collector (68) to travel within the chamber (70) from an initiating position (78) where fibre collection initiates to a finishing position (79) where the fibre collection finishes,
**characterised in that** the collector (68) is mounted to travel towards the spinner (63) as the collector travels from the initiating position towards the finishing position.

2. Apparatus according to claim 1. in which the initiating position (78) is further from the top rotor of the spinner (63) than is the finishing position (79).

3. Apparatus according to either preceding claim in which the collector is a substantially flat collector which travels towards the spinner.

4. Apparatus according to claim 3 in which the collector is mounted to travel towards the spinner at an angle of - 15° from the horizontal (upwardly) to an angle of +60° to the horizontal (downwardly).

5. Apparatus according to claim 3 in which the collector is mounted to travel towards the spinner horizontally or downwardly at an angle of up to 30° to the horizontal.

6. Apparatus according to any preceding claim in which there are means for providing lower suction over the collector closer to the initiating position and higher suction to the collector closer to the finishing position.

7. Apparatus according to any preceding claim in which the collector is mounted to enter the chamber at the initiating position and to leave the chamber at the finishing position and means are provided for substantially sealing the chamber against the collector at the initiating position.

8. Apparatus according to any preceding claim in which there are at least two of the spinners in side-by-side relationship.

9. A process for making a web of vitreous fibres using apparatus according to any preceding claim.

10. A process of making a bonded product of vitreous fibres comprising forming a web of vitreous fibres and bonding agent by a process according to claim 9 and either curing the web to form the bonded product or cross lapping the web and then curing the cross lapped product.

## Patentansprüche

1. Vorrichtung zur Herstellung einer Bahn aus künstlichen glasartigen Fasern, umfassend
eine Zentrifugalschleudervorrichtung (63) mit einem Frontende (66), einem ersten drehbaren Rotor oder einem Satz von drehbaren Rotoren bestehend aus einem ersten Rotor (62) und einem oder mehreren folgenden Rotoren (62), wobei der oder jeder Rotor zur Rotation um eine im wesentlichen horizontale Achse vor dem Frontende (66) montiert ist, wodurch Schmelze (61), die auf den ersten Rotor (62) gegossen wird, als Fasern abgeschleudert wird, oder, in einem Satz von Rotoren, auf den oder jeden folgenden Rotor (62) in Abfolge geworfen wird und von dem oder jedem folgenden Rotor (62) und gegebenenfalls dem ersten Rotor (62) als Fasern abgeschleudert wird,
eine Motoreinrichtung zum Drehen des oder jedes Rotors,
eine Luftzufuhreinrichtung zur Zuführung von Luft um die und/oder von der Schleudervorrichtung, wodurch die Fasern von der Schleudervorrichtung (63) nach vorne als Wolke von Fasern geblasen werden, die in Luft mitgeführt werden,
eine Sammelkammer (65), die sich vorwärts von der Schleudervorrichtung erstreckt,
eine Sammelvorrichtung (68), die in der Sammelkammer (65) montiert ist, um die Wolke von Fasern direkt von der Schleudervorrichtung (63) aufzunehmen,
eine Saugeinrichtung (69) zum Saugen durch die Sammelvorrichtung (68) und dadurch Sammeln von Fasern von der Wolke auf der Sammelvorrichtung (68) als Bahn (76),
und eine Einrichtung, die bewirkt, dass die Sammelvorrichtung (68) sich in der Kammer (70) von einer Startposition (78), bei der die Fasersammlung beginnt, zu einer Endposition (79), bei der die Fasersammlung endet, bewegt,
**dadurch gekennzeichnet, dass** die Sammelvorrichtung (68) montiert ist, um sich in Richtung der Schleudervorrichtung (63) zu bewegen, während die Sammelvorrichtung sich von der Startposition in Richtung der Endposition bewegt.

2. Vorrichtung nach Anspruch 1, bei der die Startposition (78) entfernter von dem oberen Rotor der Schleudervorrichtung (63) ist als es die Endposition (79) ist.

3. Vorrichtung nach irgendeinem vorhergehenden Anspruch, bei der die Sammelvorrichtung eine im wesentlichen ebene Sammelvorrichtung ist, die sich in Richtung der Schleudervorrichtung bewegt.

4. Vorrichtung nach Anspruch 3, bei der die Sammelvorrichtung montiert ist, um sich in Richtung der Schleudervorrichtung in einem Winkel von -15° von der Horizontalen (darüber) bis zu einem Winkel von +60° zu der Horizontalen (darunter) zu bewegen.

5. Vorrichtung nach Anspruch 3, bei der die Sammelvorrichtung montiert ist, um sich in Richtung der Schleudervorrichtung horizontal oder darunter mit einem Winkel von bis zu 30° zu der Horizontalen zu bewegen.

6. Vorrichtung nach irgendeinem vorhergehenden Anspruch, bei der es eine Einrichtung zur Bereitstellung von weniger Saugung über der Sammelvorrichtung näher an der Startposition und von mehr Saugung zur Sammelvorrichtung näher an der Endposition gibt.

7. Vorrichtung nach irgendeinem vorhergehenden Anspruch, bei der die Sammelvorrichtung montiert ist, um in die Kammer an der Startposition einzutreten und die Kammer an der Endposition zu verlassen, und eine Einrichtung bereitgestellt ist, um die Kammer gegen die Sammelvorrichtung an der Startposition im wesentlichen abzudichten.

8. Vorrichtung nach irgendeinem vorhergehenden Anspruch, bei der es mindestens zwei der Schleudervorrichtungen in einer Seite an Seite-Beziehung gibt.

9. Verfahren zur Herstellung einer Bahn aus glasartigen Fasern unter Verwendung einer Vorrichtung nach irgendeinem vorhergehenden Anspruch.

10. Verfahren zur Herstellung eines gebundenen Produkts von glasartigen Fasern, umfassend die Bildung einer Bahn von glasartigen Fasern und Bindemittel durch ein Verfahren nach Anspruch 9 und entweder das Härten der Bahn unter Bildung des gebundenen Produkts oder das kreuzweise Aufeinanderlegen der Bahn und dann das Härten des kreuzweise aufeinandergelegten Produkts.

## Revendications

1. Appareil destiné à fabriquer une nappe de fibres vitreuses manufacturées comportant
un dispositif de filage centrifuge (63) ayant une extrémité avant (66), un premier rotor rotatif ou un ensemble de rotors rotatifs se composant d'un premier rotor (62) et d'un ou plusieurs rotors (62) consécutifs, le ou chaque rotor étant monté pour rotation autour d'un axe sensiblement horizontal à l'avant de l'extrémité avant (66) de telle sorte que la masse fondue (61) versée sur le premier rotor (62) est projetée sous forme de fibres, ou bien, dans un ensemble de rotors, est projetée sur le ou chaque rotor (62) consécutif à la suite et est projetée depuis le ou chaque rotor (62) consécutif, et éventuellement depuis le premier rotor (62), sous forme de fibres,
des moyens de moteur destinés à entraîner en rotation le ou chaque rotor,
des moyens d'alimentation en air destinés à délivrer de l'air autour et/ou depuis le dispositif de filage de sorte que les fibres sont soufflées vers l'avant depuis le dispositif de filage (63) sous forme d'un nuage de fibres entraînées dans l'air,
une chambre de collecte (65) qui s'étend vers l'avant depuis le dispositif de filage,
un collecteur (68) monté dans la chambre de collecte (65) afin de recevoir le nuage de fibres directement depuis le dispositif de filage (63),
des moyens d'aspiration (69) destinés à appliquer une aspiration à travers le collecteur (68) et recueillir ainsi des fibres provenant du nuage sur le collecteur (68) sous forme d'une nappe (76),
et des moyens destinés à amener le collecteur (68) à se déplacer à l'intérieur de la chambre (70) depuis une position initiale (78) où la collecte de fibres commence jusqu'à une position finale (79) où la collecte de fibres se termine,
**caractérisé en ce que** le collecteur (68) est monté afin de se déplacer vers le dispositif de filage (63) lorsque le collecteur se déplace depuis la position initiale vers la position finale.

2. Appareil selon la revendication 1, dans lequel la position initiale (78) est plus loin du rotor supérieur du dispositif de filage (63) que la position finale (79).

3. Appareil selon l'une des revendications précédentes, dans lequel le collecteur est un collecteur sensiblement plat qui se déplace vers le dispositif de filage.

4. Appareil selon la revendication 3, dans lequel le collecteur est monté afin de se déplacer vers le dispositif de filage avec un angle de -15° depuis l'horizontale (vers le haut) jusqu'à un angle de +60° vers l'horizontale (vers le bas).

5. Appareil selon la revendication 3, dans lequel le collecteur est monté afin de se déplacer vers le dispositif de filage horizontalement ou vers le bas avec un angle jusqu'à 30° vers l'horizontale.

6. Appareil selon l'une quelconque des revendications précédentes, dans lequel il y a des moyens destinés à procurer une aspiration plus faible sur le collecteur plus près de la position initiale et une aspiration plus élevée sur le collecteur plus près de la position finale.

7. Appareil selon l'une quelconque des revendications précédentes, dans lequel le collecteur est monté afin d'entrer dans la chambre au niveau de la position initiale et de sortir de la chambre au niveau de la position finale et des moyens sont prévus pour assurer de manière substantielle l'étanchéité de la chambre contre le collecteur au niveau de la position initiale.

8. Appareil selon l'une quelconque des revendications précédentes, dans lequel il y a au moins deux dispositifs de filage en relation côte à côte.

9. Processus de fabrication d'une nappe de fibres vitreuses utilisant un appareil selon l'une quelconque des revendications précédentes.

10. Procédé de fabrication d'un produit collé de fibres vitreuses comportant le fait de former une nappe de fibres vitreuses et de coller un agent grâce à un processus selon la revendication 9 et de durcir la nappe afin de former le produit collé ou bien de déposer de manière croisée la nappe et ensuite durcir le produit déposé de manière croisée.
